# EUROPEAN PATENT SPECIFICATION

(11) **EP 2 686 585 B1**
(45) Date of publication and mention of the grant of the patent: **26.10.2016**
(21) Application number: 12743537.8
(22) Date of filing: 14.03.2012
(51) Int. Cl.: F16H 57/04, F16H 57/027, B60K 6/365, F16H 57/08, F16H 3/72, B60K 6/547, B60K 6/48, F16H 3/54

(54) **DRIVE SYSTEM FOR A VEHICLE**
ANTRIEBSSYSTEM FÜR EIN FAHRZEUG
SYSTÈME DE TRANSMISSION POUR VÉHICULE

(30) Priority: 18.03.2011 IN MM07812011; 08.09.2011 IN MM25122011
(43) Date of publication of application: 22.01.2014
(73) Proprietor: Tata Motors Limited, 400 001 Mumbai, Maharashtra (IN)
(72) Inventor: VENKATAPATHI, Janardhanan, Mumbai 400 001, Maharashtra (IN)
(74) Representative: Ottazzo, Marco Francesco Agostino
(86) International application number: PCT/IN2012/000175
(87) International publication number: WO 2012/140664

(56) References cited:
- DE-A1- 19 756 253
- GB-A- 843 146
- JP-A- 2004 360 726
- JP-A- 2006 250 270

## Description

### FIELD OF THE INVENTION

The invention is related to a hybrid drivetrain for a vehicle.

### BACKGROUND OF THE INVENTION

Drive systems for vehicles customarily comprise an internal combustion engine as the driving machine & a subsequent transmission. The transmission plays an important role in operating the engine in its efficient regions & also needs to efficiently transmit power to the wheels, resulting in better fuel economy.

GB 843 146 A shows such a drive system and discloses the features of the preamble of claim 1.

### SUMMARY OF THE INVENTION

The proposed objective of operating the engine in its efficient region is achieved by making the transmission behave closer to CVT, but having more efficiency than as CVT. The proposed objective of reducing transmission losses is by having an efficient launch element unlike the torque converter or a friction clutch & an efficient lubrication system without a lubricating pump & having reduced splash losses.

It is proposed to add a compact and an efficient self lubricating planetary system, a dry clutch & an electric motor-generator in between a regular automated manual / Automatic transmission & the internal combustion engine.

The said planetary gear drive encompasses the elements like the sun gear, the internal gear, the planet carrier, staged planet gear sets & covers. Of these elements, the internal gear meshes with staged planet secondary set and sun gear meshes with staged planet primary set & is coupled with the electric motor-generator. The transmission input shaft & the engine are connected to the planetary system,. The electric motor-generator is of four quadrant type. A clutch is introduced for the lockup or bypass of the planetary gear drive. In an additional arrangement, an additional clutch is provided to disconnect the engine from the driveline. In an additional arrangement, a one way clutch or a lock is provided on the engine crank shaft or the input shaft to the planetary or the planet carrier to prevent its anticlockwise rotation for start-stop operation or for the Zero-Emission-Vehicle-operation, that is, powering the vehicle by the electric motor, when the internal combustion engine is not turning. An additional motor / generator can be connected to the transmission output shaft / wheels to drive the vehicle during the gear shift operation or supports with additional torque during vehicle acceleration, launch or supports vehicle braking. A battery / electric energy storage device is provided for storing the elctrical energy produced & reuse it when required.

### BRIEF DESCRIPTION OF THE DRAWINGS

The invention will now be described, by way of example, with reference to the accompanying drawings in which:
FIG. 1 is a sketch of the drive system according to the present invention.
FIG. 2A is a detailed sketch of the drive system according to the present invention.
FIG. 2B, 2C, 2D, 2E & 2F are additional sketches supplementing the sketch FIG: 2A.
FIG. 2G is a sketch of another arrangement of the drive system according to the present invention.
FIG. 3 is a sketch of saw tooth curve of vehicle, engine & transmission speeds.
FIG. 4 is a sketch showing a typical engine performance map with an example of engine operation shifted to a new efficient position with the proposed system.
FIG. 5 is a sketch of saw tooth curve of vehicle, engine, transmission & motor-generator speeds, during the launch & drive mode with a stable engine speed & clutch continuously open.
FIG. 6 is a sketch of the drive system according to the present invention with a support motor-generator at the output end of the transmission
FIG. 7 is a sketch showing the brake energy recuperation scenario while the clutch is open.
FIG. 8 is a sketch of engine, transmission & motor-generator speeds, during the vehicle launch mode.
FIG. 9A & 9B are sketches of the drive system according to the present invention, with a clutch to decouple the engine from the input driveline.
FIG. 10A & 10B are sketches of the drive system according to the present invention, with a one way clutch / lock up clutch in the input driveline.

### DETAILED DESCRIPTION OF THE INVENTION

Referring now to the drawings wherein the showings are for the purpose of illustrating a preferred embodiment of the invention only, and not for the purpose of limiting the same

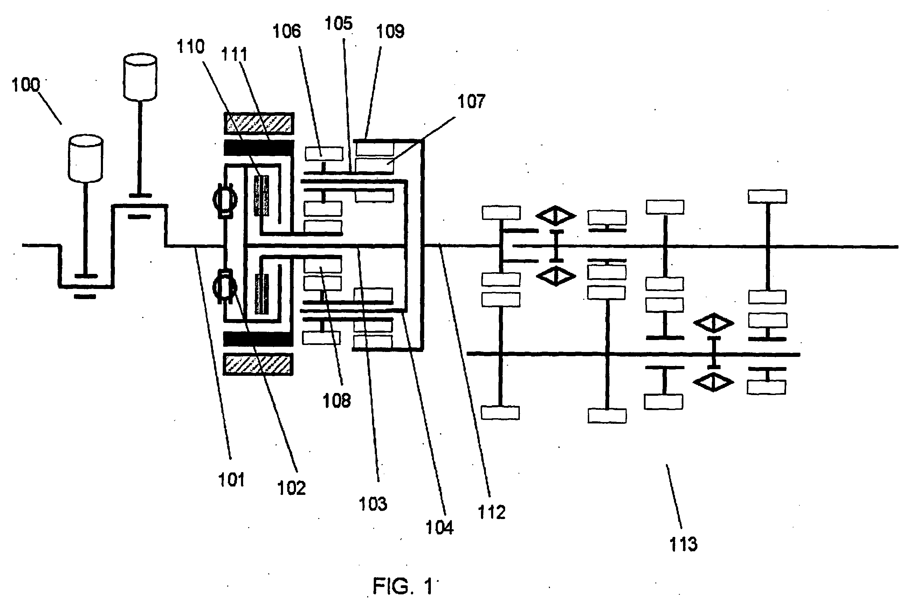

FIG. 1 presents first embodiment according to the present invention. The prime mover engine (100) drives the crank shaft or flywheel (101). The crank shaft or flywheel (101) is connected to torsional damper system (102), which drives the input shaft (103). The input shaft (103) is connected to the planet carrier (104). The planet carrier (104) has at least one staged planet gear set (105). The staged planet gear set (105) is having planet primary gear (106) and planet secondary gear (107) which is integral with each other. The planet secondary gear (107) is smaller in diameter and has lesser number of teeth as compared to the planet primary gear (106). The planet primary gear (106) meshes with the sun gear (108), while the planet secondary gear (107) meshes with the internal gear (109). The sun gear (108) is connected to the motor-generator (111). The internal gear (109) is connected to the transmission input shaft (112) of the transmission (113). The clutch (110) can couple and decouple the sun gear (108) with the input shaft (103) / carrier (104) by closing and opening the clutch (110) respectively, thereby locking and unlocking the planetary system. In an alternate arrangement, a clutch similar to clutch (110) can couple and decouple the planet carrier (104) with the Internal gear (109) by closing and opening the clutch respectively, thereby locking and unlocking the planetary system. In an another alternate arrangement, a clutch similar to clutch (110) can couple and decouple the Internal Gear (109) with the sun gear (108) by closing and opening the clutch respectively, thereby locking and unlocking the planetary system.

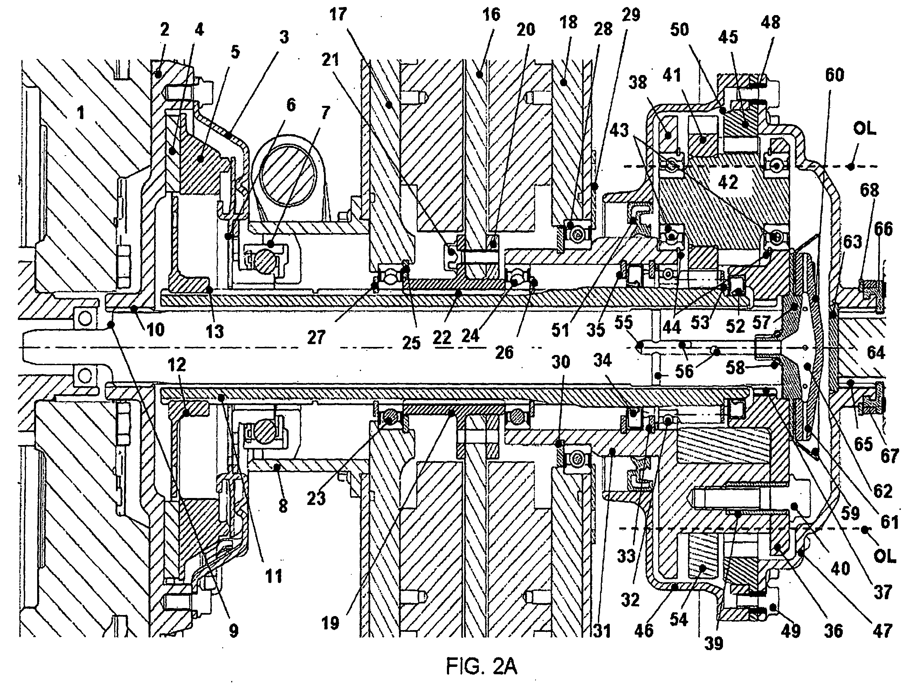

FIG. 2A presents a detailed sketch of the first embodiment. To the output element of the a motive drive source, which is a flywheel (1) is bolted a drive plate (2), which drives the input shaft (9) through a spline (10). A clutch cover assembly (3) is bolted to the drive plate (2), which consists of the pressure plate (5) and a diaphragm spring (6). The diaphragm spring (6) presses the pressure plate (5) against the clutch friction disc (4) results in pressing it against the drive plate (2). The clutch friction disc (4) is connected to the clutch disc hub (12), which is connected to the sun gear shaft (11) through the spline (13). When the release bearing (7) is pressed against the diaphragm spring (6) the pressure plate (5) eases the pressure on the friction disc (4) which in turn makes the hollow sun gear shaft (11) free from the drive plate (2). The release bearing (7) is located inside the cover tube (8) & can axially move / slide inside the cover tube (8).

The sun gear shaft (11) is supported by the sealed bearings (23) & (24) & bearing (32). The bearings (24) & (32) are housed in the planet carrier LH (31). The planet carrier LH (31) is in turn supported by the sealed bearing (28). The bearing (23) is held in housing (17) and axially located on the housing (17) through the retaining ring (25). The bearing (28) is held in housing (18) & axially located on the housing (18) through the retaining ring (29). The Carrier LH (31) is axially restrained with respect to the bearing (28), by the retaining ring (30) which is mounted on the carrier LH (31). The sun gear shaft (11) is connected to the rotor shaft (19) through the spline (22). The rotor (16) of the electric motor-generator is connected to the rotor shaft (19) by the bolts (21) & the threaded ring (20). The rotor shaft (19), the bearing (24) & the sun gear shaft (11) are axially located with the help of the bearing (23) & the retaining rings (26) & (27) mounted on the sun gear shaft (11).

The planet carrier RH (36) is bolted to the planet carrier LH (31) through the bolts (40) & positionally located by the hollow dowels (39). The carrier shaft / input shaft (9) which passes through the sun gear shaft (11) is located in the planet carrier RH (36) & is connected to the planet carrier RH (36) through the spline (37). The input shaft (9) or the sun gear shaft (11) thus do not require any bearing support between each other. This can result in reduced sun gear diameter equivalent to the twice the radial thickness of any bearing that may be used between them. As the internal gear diameter of a planetary system is a function of the planetary ratio multiplied by the sun gear diameter, a reduced sun gear diameter will result in an overall reduction of planetary size. A reduced diameter of the planetary unit also reduces the inertia of the whole system, weight, raw material, lubricating oil, speeds, centrifugal forces, centrifugal pressures of oil, fuel, balancing issues & improves controllability of the transmission.

The planet set is split into two stages that is the planet primary gear set (41) & planet secondary gear set (42). Planet secondary gear set (42) is smaller in diameter and has lesser number of teeth as compared to the planet primary gear set. (41). Planet primary gear set (41) meshes with the sun gear (11) & is mounted and welded to the planet secondary gear set (42). The planet secondary gear set (42) meshes with the internal gear (45) & is mounted on the planet carrier LH (31) and carrier RH (36) through the bearings (43). Because of the smaller planet secondary gear set (42), the internal gear (45) diameter will reduce, thereby reducing the overall size of the planetary unit. The bearings (43) & the planet secondary gear set (42) are axially located between the planet carrier LH (31) & carrier RH (36) through the retaining rings (44) which are mounted on the bearings (43). The additional axial space consumed because of having additional planet secondary gear set (42), is effectively offset by locating the oil seal (52) & spline (37) below the planet secondary gear set (42). This is because the oil seal (52) & spline (37) also require axial space.

The arrangement of having the planet split into two stages helps in reduced size of the planetary, resulting in reduced inertias, weight, raw material, lubricating oil, speeds, centrifugal forces, centrifugal pressures of oil, fuel, balancing issues & improves controllability of the transmission. The bearings (43) are placed outside of the planet gears unlike most planet gears, thereby resulting in freedom for larger bearings, which in turn take the bearing diameters closer to the periphery of the planetary unit, which again results in lower usage of lubrication oil in this type of systems, resulting in lower losses, resulting in better fuel economy.

On the internal gear (45) is located & mounted the LH cover (46). On the internal gear (45) is also mounted the RH cover (47) which is located by the hollow dowels (48). The LH cover (46), the RH cover (47) & the internal gear (45) are held together by the bolts (49). The LH cover (46), the RH cover (47) & the internal gear (45) together form an envelope around the planetary gear system described and hold the lubricating oil for the planetary system. The oil contained in this envelope provides lubrication for the planetary system only when there is a relative motion between the internal gear (45) and the planet carrier (31, 36). Thus this lubricating system is efficient as it works only when lubrication is required, and also avoids a lubricating pump and the complex oil passages.

The seals (34), (51) & (52) prevent the lubricating oil from leaking to the outside at the rotating interfaces. The bolts (49) which are located in the periphery of the planetary system are also used as drain plugs for filling & draining oil out of the planetary system. The passage (50) formed between the internal gear (45) & the LH cover (46) provides access for the lubricating oil to be filled or drained through the bolts / drain plugs (49). The bolts / drain plugs (49) are also magnetic to hold the metallic debris that may be generated. Thus the bolts / drain plugs (49) fulfill several needs of mounting, sealing, oil filling & oil drain needs.

The quantity of the lubricating oil is governed by the closeness of the planet bearings (43) to the periphery of the system. Thus the arrangement of the bearings (43), & the arrangement of the planet set split into stages (41) & (42) results in the bearings (43) being very close to the periphery of the system, resulting in very less oil required for lubrication represented by the oil level line (OL) while the system is in rotation.

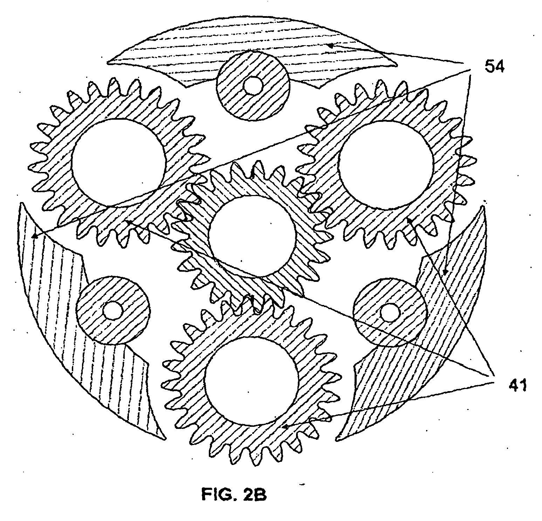

An oil quantity reducer- guides (54) as shown in FIG. 2B is placed between the planet gears sets (41, 42), further reduces the oil quantity & also guides the oil flow around the planet gears sets (41, 42), to reduce the turbulence.

An oil blocking washer (53) may be attached to the face of the sun gear near to the oil seal (52), for preventing excessive oil impinging on the oil seal (52).

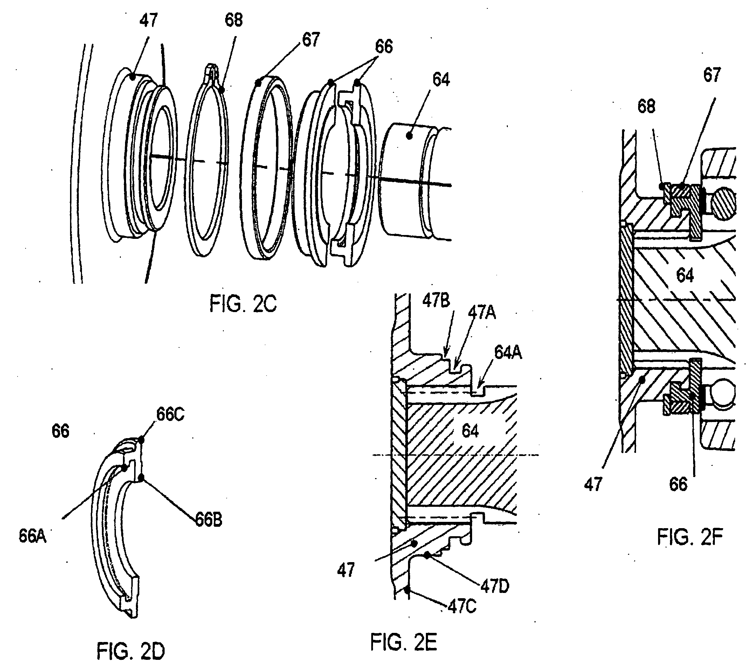

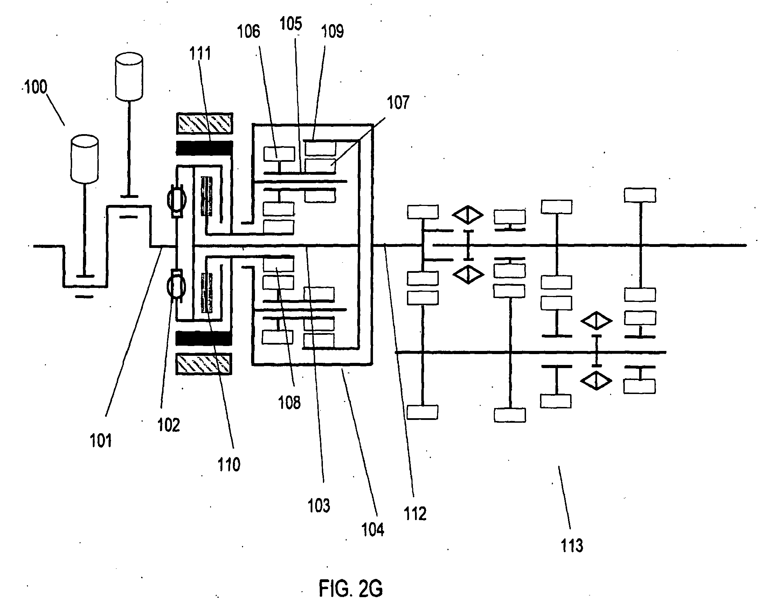

The input shaft (9) has an axially extended air passage (55). Oil Gallery LH (57), oil deflector (59) & oil gallery RH (60) as shown in the FIG. 2 are bolted (not shown) to the Planet carrier RH (36) and the mating surfaces between them are sealed. An "O" ring (58) is placed between the oil gallery LH (57) and the input shaft (9) for sealing air leakages.

An oil gallery (62) is formed in between the oil gallery LH (57) & oil gallery RH (60) in the centre. One end of the air passage (55) is connected or communicating to the oil gallery (62) and the other end is communicating to the atmosphere outside of the planetary system through radial passages (56) on the input shaft (9). The air passages (56) can be inclined to the axis of the shaft (9) for the convenience of packaging or manufacturing ease or any other requirements. Atleast two passages (56) which are radially opposite to each other are required for avoiding imbalances in the shaft (9). If there are more than two radial air passages, then they should be at equal angular intervals to avoid imbalances. The oil gallery RH (60) has at least two radial oil passages (61). The air passages (61) can also be inclined to the axis of the shaft (9) for the convenience of packaging or manufacturing ease or any other requirements. Atleast two passages (61) which are radially opposite to each other are required for avoiding imbalances in the oil gallery RH (60). If there are more than two radial air passages, then they should be at equal angular intervals to avoid imbalances. One end of the passages (61) opens into the gallery (62) and the other end is exposed to lubricating oil of the planetary system. The oil gallery (62) enables the linking of all the air passages (61) with the axial air passage (55). The oil gallery (62) also guides / funnels the exit of entered oil, back into the planetary system , through the passages (61). The oil deflector (59) is shaped such that it prevents dripping oil from entering the passages (61), whereas it does not prevent the oil exit from the radial passages (61). The oil deflector (59) is obliquely extended to cover the radial openings (61) to avoid entry of the dripping oil into the passages (61).

The oil that splashes around and dripped is deflected by the oil deflector (59) so that most of the splashing and dripping oil does not enter the passages (61). In case the oil enters into the passages (61) and then into the gallery (62), the oil gets ejected out back into the planetary system through the passages (61) either by the gravity or by the centrifugal force that occurs due to the rotation of the shaft (9). The oil entering through the passage (61) at top will removed through the passage (61) at bottom due to gravity. The air pumping effect produced by the air passages (61) because of centrifugal force; when the shaft (9) is rotating is compensated by the air pumping effect of passages (56) through centrifugal force. Thus this breathing arrangement allows air exchange between the outside and inside of the planetary system, yet not allow the oil to come out of the system.

The RH Cover (47) drives the transmission input shaft (64) through the spline (65). The plug (63) is welded to the RH cover (47) to cover the bore formed by the spline (65).

Referring to FIG. 2C, 2D, 2E & 2F, the RH Cover (47) is retained on the transmission input shaft (64) through the coupling arrangement formed by the elements - two semi circular couplings (66) with retaining lugs (66A) & (66B) (see FIG. 2D), a coupling sleeve (67) for holding the semi circular couplings (66) together, a retaining ring (68) and a shoulder (66C) on semi circular couplings (66) for holding the coupling sleeve (67) in the position. Grooves (47A) & (47B) (see FIG. 2E) on RH Cover (47) are provided for seating the lugs (66A) of the semi circular couplings (66) and retraining ring (68) respectively. A groove (64A) (see FIG. 2E) on transmission input shaft (64) is provided for the lugs (66B) of the semi circular couplings (66). The coupling (66) is semi circular (see FIG. 2C & 2D), with retaining lugs (66A) & (66B) and a shoulder (66C). The retaining lug (66A) of coupling (66) sits in the groove (47A) of the RH Cover (47). The retaining lug (66B) of coupling (66) sits in the groove (64A) of transmission input shaft (64). Both the semi circular couplings (66) are assembled on the RH Cover (47) and the transmission input shaft (64) by locating the lugs (66A, 66B) in the corresponding grooves on the RH Cover (47A) and the transmission input shaft (64A) respectively. The coupling sleeve (67) holds both the semi circular couplings (66) against the RH Cover (47) and the transmission input shaft (64) (see FIG. 2F). The retaining ring (68) sits in the groove (47B) of RH Cover (47) after assembly of couplings (66), coupling sleeve (67) with RH Cover (47) and transmission input shaft (64). The coupling sleeve (67) is held in place by the retaining ring (68) & the shoulder (66C) on the couplings (66). (see FIG. 2F for assembly situation).

During assembly, the retaining ring (68) is first placed on shoulder (47D) of RH Cover (47), and then followed by coupling sleeve (67), before assembly of couplings (66) as the shoulder (47D) of the RH Cover (47) is not accessible from the RH Cover side because of the wall (47C). After assembly of couplings (66), the coupling sleeve (67) is slid over the couplings (66), followed by the sliding of retaining ring (68) into the groove (47B) on RH Cover (47).

This arrangement avoids the need for the transmission input shaft (64) to pass through the RH cover (47) completely & have some retention means on itself inside the RH cover (47) for the purpose of axially retaining the RH cover (47). This arrangement facilities separation of the transmission as an independent module for the purpose of ease of serviceability, assembly & disassembly etc. This arrangement also avoids any sealing needs between the RH cover (47) & the transmission input shaft (64).

FIG. 2G presents another embodiment of the arrangement of the invented system. The prime mover engine (100) drives the crank shaft or flywheel (101). The crank shaft or flywheel (101) is connected to torsional damper system (102), which drives the Input shaft (103). The Input shaft (103) is connected to the Internal gear (109). The planet carrier (104) has at least one staged planet gear set (105). The staged planet gear set (105) is having planet primary gear (106) and planet secondary gear (107) which is integral with each other. The planet secondary gear (107) is smaller in diameter and has lesser number of teeth as compared to the planet primary gear (106). The arrangement of having the planet split into two stages helps in reduced size of the planetary, resulting in reduced inertias, weight, raw material, lubricating oil, speeds, centrifugal forces, centrifugal pressures of oil, fuel, balancing issues & improves controllability of the transmission. The planet primary gear (106) meshes with the sun gear (108), while the planet secondary gear (107) meshes with the internal gear (109). The sun gear (108) is connected to the motor-generator (111). The planet carrier (104) is connected to the transmission input shaft (112) of the transmission (113). The planet carrier (104) includes a first and second cover which forms an envelope around the planetary system & contains the lubricating oil for the system.. The oil filling and drain arrangement, oil quantity reducer arrangement, oil blocking washer, oil seals, breathing system containing gallery and passages, and oil deflector as explained in first embodiment can also be used here. The clutch (110) can couple and decouple the sun gear (108) with the Input shaft (103) by closing and opening the clutch (110) respectively, thereby locking and unlocking the planetary system. In an alternate arrangement, a clutch similar to clutch (110) can couple and decouple the planet carrier (104) with the Internal gear (109) / Input shaft (103) by closing and opening the clutch respectively, thereby locking and unlocking the planetary system. In an another alternate arrangement, a clutch similar to clutch (110) can couple and decouple the planet carrier (104) with the sun gear (108) by closing and opening the clutch respectively, thereby locking and unlocking the planetary system.

Referring to FIG. 1, when the clutch (110) is opened, the engine is directly driving only the input shaft (103) and the sun gear (108) can have same or different speed as that of the engine (100). In this condition the motor-generator (111) and hence the speed of the sun gear (108) is maintained very low or zero by controlling the motor-generator. This will result in the speed of the internal gear (109) and hence the speed of the transmission input shaft (112) becoming more than the speed of the engine (100) to have a higher speed of transmission output. 'R' is the ratio of speed of transmission input shaft (112) to the speed of the engine (100) in the above mentioned situation, that is when the speed of the sun gear (108) is zero and the clutch (110) is open. In actual operation, it is advisable to operate the motor-generator (111) at speeds slightly above zero (for example 50 rpm) that is clockwise (same direction as engine), or slightly below zero (for example -50 rpm) that is counterclockwise, for purposes of charging the battery or supplementing the engine power respectively and also for effcient operation of the system. The planetary gear ratio and hence the ratio R should be such that while operation of the transmission in a particular gear, will result in a drive ratio (ratio of transmission output speed to engine output speed) which is in between the ratios of the current gear and the next higher gear of the transmission. For example, when the transmission is in 2^{nd} gear, the transmission output speed will become closer to a speed in between the 2^{nd} gear and the 3^{rd} gear speeds, because of the ratio R. In clutch closed condition, the transmission output speed would be equal to 2^{nd} gear speed, because the speeds of the motor-generator, the engine and the transmission input shaft are same in clutch closed condition. In effect if a 6 speed transmission is used, the effective speeds available with this arrangement is 12 speeds. These multiple gear ratio options can help in operating the engine in its efficient regions like a CVT.

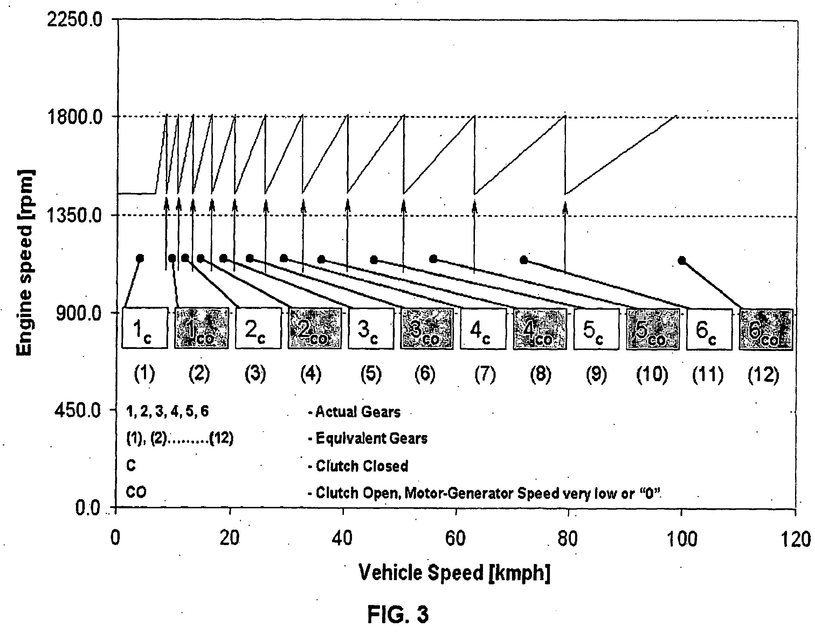

Referring to FIG. 3, which shows the example of engine speeds versus vehicle speeds for various gears, open / close conditions of clutch and speeds of the motor-generator. The clutch open condition with sun gear speed controlled will result in ratios 1co, 2co, 3co etc. and clutch closed condition will result in ratios 1c, 2c, 3c etc. The multiple ratio steps (1c, 1co, 2c, 2co, 3c, 3co, ....etc.) result in operating of the engine in efficient region. The fuel efficiency is achieved by operating the engine in efficient region and the clutch open/close conditions with sun gear speed control will manage the required drive ratios. Whereas in the conventional systems with limited drive ratios, the engine needs to work in larger speed ranges to achieve drivability, which will affect fuel economy. The efficient engine operating speed range in this example is between 1450 to 1800 rpm. The engine efficient operating speed range can be determined by engine performance characteristics. Further, the operating range of engine can be modified to user selective operating modes such as sporty, normal and economy to set engine efficient operating speed accordingly for each case.

In clutch open state, it is further possible to shift the engine operation to its further efficient regions by having the motor-generator rotate in counterclockwise direction that is a direction opposite to engine rotation. This would improve the fuel economy depending on the engine specific fuel consumption map.

Also in clutch open state, the motor-generator can supplement engine power by having the motor-generator rotate in counterclockwise direction that is a direction opposite to engine rotation. This would further improve the fuel economy.

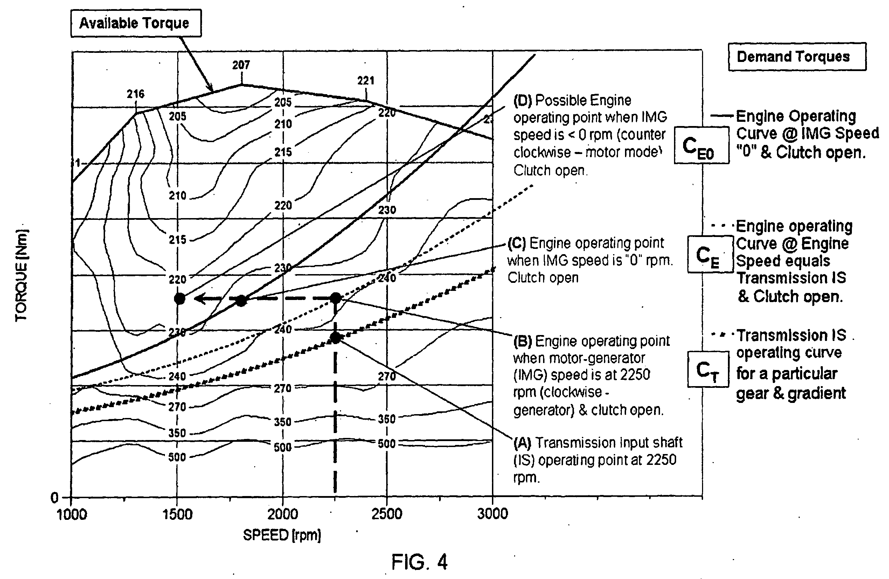

Referring to FIG. 4 is an exemplary embodiment graph of an engine specific fuel consumption map at various torques and speeds. C_{T} is the demand torque curve on the transmission input shaft by the vehicle, plotted on this graph. C_{E} is the corresponding demand torque curve on the engine if the clutch is open, where C_{E} = C_{T} * R, when the transmission input shaft speed, motor-generator speed and engine speed are same. C_{E0} is the corresponding demand torque curve on the engine if the clutch is open, where C_{E0} = C_{T} * R, when the motor-generator speed is zero. A is an operating point of transmission input shaft on the transmission input shaft operating curve (C_{T}). At point A the clutch is closed, means the motor generator speed equals the engine and the transmission input shaft speeds. Also at point A, the motor generator torque is zero; hence the engine torque and transmission input shaft torque is equal. Hence the engine also operates at the same point A, when the clutch is closed and when the torque on the motor-generator is zero. When the clutch is opened, the engine operating point shifts to point B on curve C_{E}, as the engine has to also support the load of the generator in order to supply the desired torque on the transmission input shaft at point A. At point B, the engine, the transmission input shaft & the motor-generator speeds are same. When the motor-generator speed is reduced to zero, the engine operating point shifts to point C (because of the ratio R) on curve C_{E0}, corresponding to transmission input shaft operating point A. At point C and point A, the demand power on the engine is same, however the engine operates at a possibly better fuel efficient point C, depending on the engine specific fuel consumption map. The engine can also be operated in between the point B and the point C. While operating the engine between the point B and the point C, though the engine power is more than the transmission input shaft power, there can be possible fuel economy which depends on the engine specific fuel consumption map. The engine operating point C can be shifted to an even possibly more fuel efficient point D (depending on the engine specific fuel consumption map), by operating the motor-generator in a direction opposite to engine that is counterclockwise direction. At point D, the engine power is lower than the transmission input shaft power, the difference between the powers being supplied by the motor. This would result in additional fuel economy.

When the vehicle is being driven with the clutch in open, for the aid of the driving or accelerating & coasting or decelerating of the vehicle, the power & hence the torque on the motor-generator is controlled along with the fuelling control of the engine.

When there is a need to close the clutch, the engine and the motor-generator speeds are made to rapidly approach the transmission input shaft speed, so that the clutch can be closed and the motor-generator can be relieved and the system works in a traditional way - This happens in an extremely short time and without torque interrupt.

In order to get back to the clutch open mode, the motor-generator is made to apply a torque on the sun gear and then the clutch is opened, so that there is no torque interrupt in the driveline.

For a short burst acceleration request while the clutch is open and in an adequate battery situation, the engine and the motor-generator speeds are made to rapidly approach the transmission input shaft speed, when the clutch is closed & the motor-generator assists the engine for vehicle acceleration.

For a short burst acceleration request while the clutch is open and in an inadequate battery situation, a gear downshift is done. Post the downshift the vehicle is driven with the clutch closed, if it is found that the driver is still pressing hard the accelerator.

When the clutch is closed, the motor-generator can assist the engine or the brakes by pumping in or drawing out high torques from the driveline.

During vehicle deceleration while the clutch is closed, when the engine speed approaches its idle speed and while the transmission is in 1^{st} gear, the clutch is opened & the motor-generator is controlled for further reduction in vehicle speed requirements.

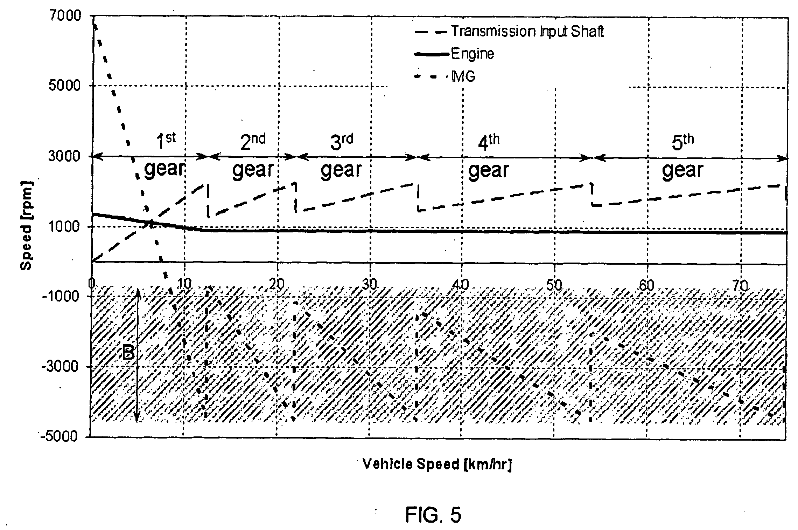

The method of running the engine in efficient speeds with the assistance of motor-generator is explained with help of FIG. 5. It is desirable to run the vehicle, partly by the engine without sweeping the engine across its inefficient speed ranges with the motor-generator (IMG) supplying a significant portion of the power requirement of the vehicle. The graph of FIG. 5 describes such a situation depicting the speeds of the engine, motor-generator (IMG), transmission input shaft & the vehicle. The clutch is open throughout this mode of operation. While the engine speed is not varied much, the transmission input shaft speed & hence the vehicle speed is changed mainly because of changes in motor-generator (IMG) speed. The gear shifting is also done to further bring about changes in vehicle speed. The speed synchronization for gear shift is done by the motor-generator. The engine speed can additionally be varied when quicker synchronization is needed. The motor-generator normally operates in a speed band B which is in counter clockwise direction (direction opposite of rotation of the engine) for better fuel economy. The operation of the motor-generator is out of this speed band B only during launch & when the vehicle is stationary.

If the battery is low or if the transmission gear ratio steps are large then the motor-generator would also work in a speed band, which has partial operation of the motor-generator in the clockwise direction & partial operation in counter clockwise direction.

For vehicle launch operation and gear shift operation when the clutch is open, the following sequence of steps are followed
1. Engine speed is not varied much.
2. If a gear change is needed, then
   a) The Torque on the motor-generator is reduced significantly.
   b) The current gear is disengaged.
   c) The motor-generator speed is varied to change the transmission input shaft speed for synchronization to the next gear. The engine speed can additionally be varied for aiding synchronization when needed.
   d) The next gear is engaged.
3. The motor-generator speed & torque is varied for vehicle acceleration & deceleration. The engine can additionally be used by varying its speed & torque for aiding quicker acceleration & deceleration of the vehicle.

In the above step 2.c and step 3, the motor-generator operates in a speed band as explained above, i.e in a band B which is in counter clockwise direction (direction opposite of rotation of the engine) for better fuel economy. The operation of the motor-generator is out of this speed band B only during launch & when the vehicle is stationary.

If the battery is low or if the transmission gear ratio steps are large then the motor-generator would also work in a speed band, which has partial operation of the motor-generator in the clockwise direction & partial operation in counter clockwise direction.

When the vehicle is being driven with the clutch in open, for the aid of the driving or accelerating & coasting or decelerating of the vehicle, the power & hence the torque on the motor-generator is controlled along with the fuelling control of the engine.

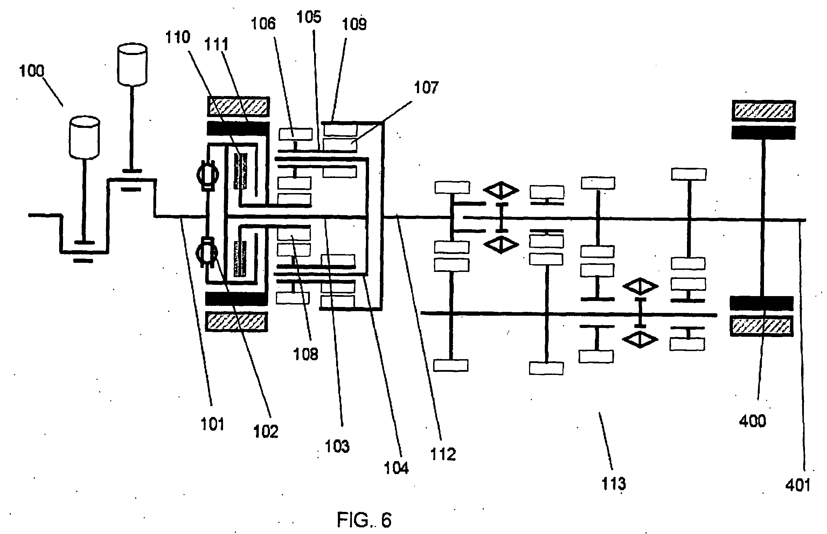

Referring to FIG. 6, the prime mover engine (100) drives the crank shaft or flywheel (101). The crank shaft or flywheel (101) is connected to torsional damper system (102), which drives the input shaft (103). The input shaft (103) is connected to the planet carrier (104). The planet carrier (104) has at least one staged planet gear set (105). The staged planet gear set (105) is having planet primary gear (106) & planet secondary gear (107) which is integral with each other. The planet secondary gear (107) is smaller in diameter and has lesser number of teeth as compared to the planet primary gear (106). The planet primary gear (106) meshes with the sun gear (108), while the planet secondary gear (107) meshes with the internal gear (109). The sun gear (108) is connected to the motor-generator (111). The internal gear (109) is connected to the transmission input shaft (112) of the transmission (113). The clutch (110) can couple and decouple the sun gear (108) with the input shaft (103) / planet carrier (104) by closing and opening the clutch (110) respectively, thereby locking and unlocking the planetary system. In an alternate arrangement, a clutch similar to clutch (110) can couple and decouple the planet carrier (104) with the Internal gear (109) by closing and opening the clutch respectively, thereby locking and unlocking the planetary system. In an another alternate arrangement, a clutch similar to clutch (110) can couple and decouple the Internal Gear (109) with the sun gear (108) by closing and opening the clutch respectively, thereby locking and unlocking the planetary system. The additional motor-generator (400) drives the transmission output / the vehicle wheels (401). The additional motor / generator (400) drives the transmission output / vehicle wheels (401) during the gear shift operation and supports with additional torque during vehicle acceleration, launch & supports vehicle braking. Thus the additional motor-generator (400) aids in gear shifting without power interruption, by driving the vehicle momentarily during gear shift operation.

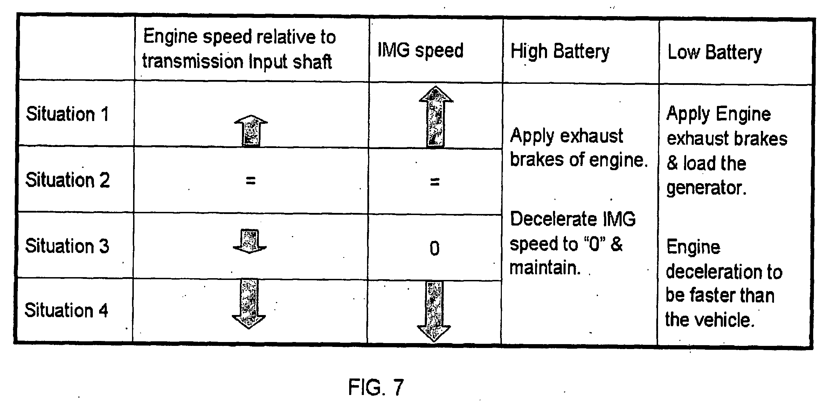

Referring to table in FIG. 7 and FIG. 1, the brake energy recuperation scenario when the clutch (110) is open is explained. When the clutch (110) is open, the engine (100), the motor-generator (111) & transmission input shaft (112) may have varying speeds. The 2^{nd} & 3^{rd} column of the table in FIG. 7 classify under 4 broad situations, the relative speeds of the engine (100) and the motor generator (111) with respect to the transmission input shaft (112), when the clutch (110) is open. In any of these 4 situations or intermediate of these situations, when a need arises to brake the vehicle, while the clutch (110) is open and when the battery is full, the speed of the motor-generator (111) is decelerated to zero or very low speed & maintained & the engine (100) is braked by the exhaust brakes or other braking means. In any of these 4 situations or intermediate of these situations, when a need arises to brake the vehicle, while the clutch (110) is open and when the battery has capacity to absorb the brake energy, the engine (100) is braked by the exhaust brakes or other braking means, such that the deceleration of the engine (100) is preferably faster than the vehicle, so that there is maximum diversion of braking power to the motor-generator (111). If the engine (100) reaches idle speed or if the engine (100) is already at idle speed, then the engine speed is maintained at idle by applying exhaust brakes or other braking means till low speeds of motor-generator (111), after this situation, the engine (100) is put off & held stationary to divert the braking energy to the motor-generator.

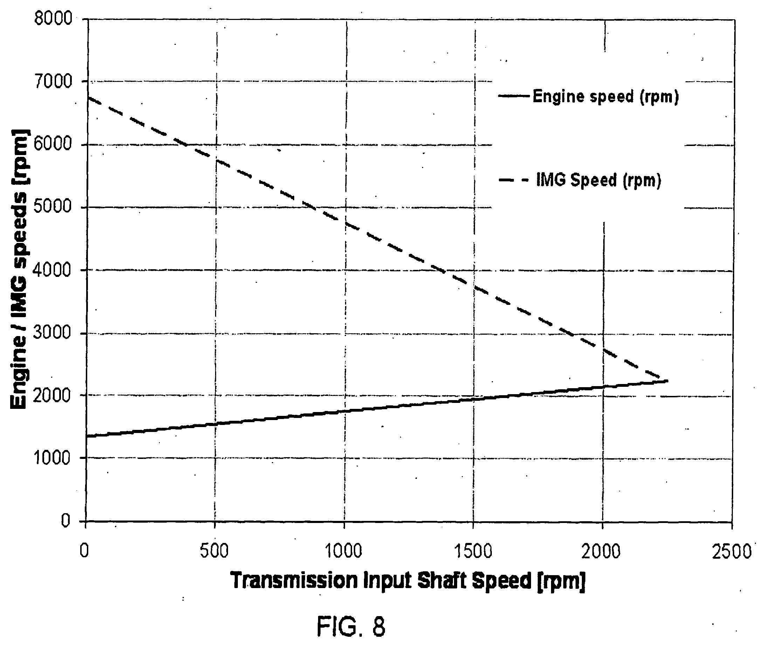

Referring to example in FIG. 8, for vehicle launch by the engine with the clutch in open state, the motor-generator is in generator mode & while loading the generator, the vehicle gets launched. During launch by engine with the clutch open, while the vehicle is stationary (Transmission Input Shaft speed is zero), the engine speed is limited to the point when max torque is reached. This is to protect the motor-generator (IMG in FIG. 8) as the generator speeds are high. This control is relaxed when the vehicle starts moving, as the generator speeds drop with vehicle speed increase. Clutch can be closed when the generator speed and the engine speed match with the transmission speed, depending on the requirement at that situation.

During vehicle launch by engine, a part of the engine torque is consumed in the motor-generator, hence the 1^{st} gear ratio of the transmission is deepened for compensation of restart grade ability purposes.

When the driver is accelerating or decelerating the engine, while in vehicle launch mode by engine and the driver is also applying the vehicle brakes, or in a condition when the vehicle is stationary and the vehicle brakes are applied and the transmission is in a gear and the clutch is open, the engine acceleration or deceleration is assisted by the motor-generator. This is because of the high reflected inertia of the motor-generator felt at the engine & also fuel efficiency.

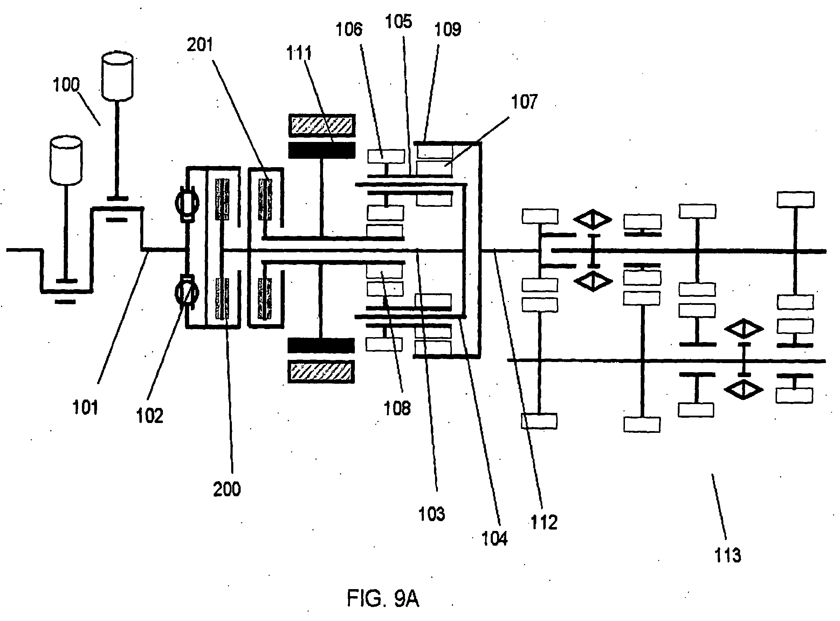

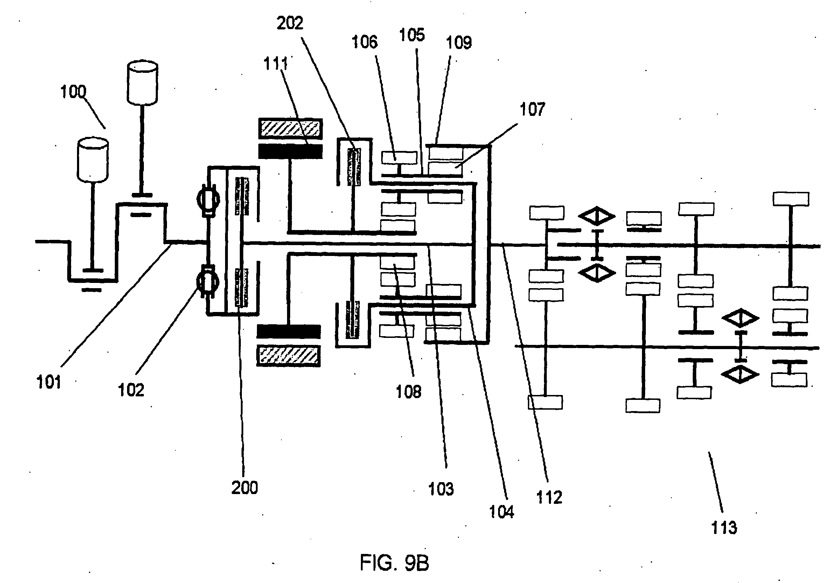

Diesel engines generate peak torque at low speeds, hence the motor-generator speeds are not very high during the start of launch. However for petrol engines, the peak torque is generated at much higher engine speeds, which would result in very high motor-generator speeds during start of launch, hence in such situations a launch by engine as in the afore mentioned method (FIG. 8) is not preferable. In such situations the scheme in FIG. 9A or 9B is preferred.

Referring to FIG. 9A, the prime mover engine (100) drives the crank shaft / flywheel (101). The crank shaft (101) is connected to torsional damper system (102), which drives the input shaft (103). The input shaft (103) is connected to the planet carrier (104). The planet carrier (104) has at least one staged planet gear set (105). The staged planet gear set (105) is made of planet primary gear (106) & planet secondary gear (107) which is integral with each other. The planet secondary gear (107) is smaller in diameter and has lesser number of teeth as compared to the planet primary gear (106).The planet primary gear (106) meshes with the sun gear (108), while the planet secondary gear (107) meshes with the internal gear (109). The sun gear (108) is connected to the motor-generator (111). The internal gear (109) is connected to the transmission input shaft (112) of the transmission (113). The clutch (200) can couple and decouple the input shaft (103) with the torsional damper (102), thereby connecting and disconnecting respectively the input shaft (103) from the engine (100). The clutch (201) can couple and decouple the sun gear (108) with the input shaft (103) by closing and opening the clutch (201) respectively, thereby locking and unlocking the planetary system.. In an alternate arrangement, a clutch similar to clutch (201) can couple and decouple the planet carrier (104) with the Internal gear (109) by closing and opening the clutch respectively, thereby locking and unlocking the planetary system. In an another alternate arrangement, a clutch similar to clutch (201) can couple and decouple the Internal Gear (109) with the sun gear (108) by closing and opening the clutch respectively, thereby locking and unlocking the planetary system. After keeping open the clutch (200) & closing the clutch (201), the vehicle can be launched by the engine (100) by gradually closing the clutch (200). In another method, after keeping open the clutch (200) & closing the clutch (201), the vehicle can be launched by the motor-generator (111), while the engine (100) can be on or off. In another method, after keeping open the clutch (200) & closing the clutch (201), the vehicle can be launched both by the motor-generator (111) & the engine (100) by gradually closing the clutch (200).

Referring to FIG. 9B, the prime mover engine (100) drives the crank shaft / flywheel (101). The crank shaft (101) is connected to torsional damper system (102), which drives the input shaft (103). The input shaft (103) is connected to the planet carrier (104). The planet carrier (104) has at least one staged planet gear set (105). The staged planet gear set (105) is made of planet primary gear (106) & planet secondary gear (107) which is integral with each other. The planet secondary gear (107) is smaller in diameter and has lesser number of teeth as compared to the planet primary gear (106). The planet primary gear (106) meshes with the sun gear (108), while the planet secondary gear (107) meshes with the internal gear (109). The sun gear (108) is connected to the motor-generator (111). The internal gear (109) is connected to the transmission input shaft (112) of the transmission (113). The clutch (200) can couple and decouple the input shaft (103) with the torsional damper (102), thereby connecting and disconnecting respectively the input shaft (103) from the engine (100). The clutch (202) can couple and decouple the sun gear (108) with the carrier (104) by closing and opening the clutch (202) respectively, thereby locking and unlocking the planetary system. In an alternate arrangement, a clutch similar to clutch (202) can couple and decouple the Internal gear (109) with planet carrier (104) by closing and opening the clutch respectively, thereby locking and unlocking the planetary system. In an another alternate arrangement, a clutch similar to clutch (202) can couple and decouple the Internal gear (109) with the sun gear (108) by closing and opening the clutch respectively, thereby locking and unlocking the planetary system. After keeping open the clutch (200) & closing the clutch (202), the vehicle can be launched by the engine (100) by gradually closing the clutch (200). In another method, after keeping open the clutch (200) & closing the clutch (202), the vehicle can be launched by the motor-generator (111)), while the engine (100) can be on or off. In another method, after keeping open the clutch (200) & closing the clutch (202), the vehicle can be launched both by the motor-generator (111) & the engine (100) by gradually closing the clutch (200).

The arrangement and methods explained above with reference to the figure 9A and 9B can be applied to diesel engines also.

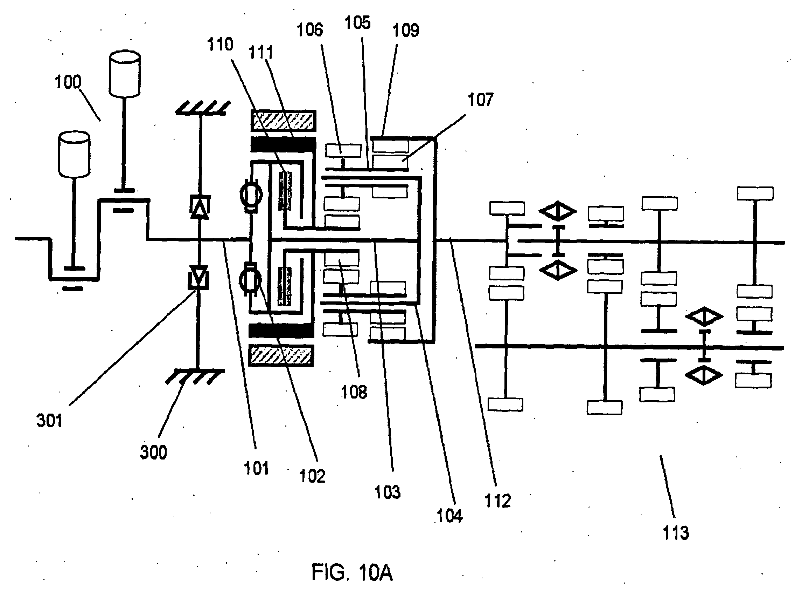

Referring to FIG. 10A, the prime mover engine (100) drives the crank shaft or flywheel (101). The crank shaft or flywheel (101) is connected to torsional damper system (102), which drives the input shaft (103). The input shaft (103) is connected to the planet carrier (104). The planet carrier (104) has at least one staged planet gear set (105). The staged planet gear set (105) is having planet primary gear (106) & planet secondary gear (107) which is integral with each other. The planet secondary gear (107) is smaller in diameter and has lesser number of teeth as compared to the planet primary gear (106). The planet primary gear (106) meshes with the sun gear (108), while the planet secondary gear (107) meshes with the internal gear (109). The sun gear (108) is connected to the motor-generator (111). The internal gear (109) is connected to the transmission input shaft (112) of the transmission (113). The clutch (110) can couple and decouple the sun gear (108) with the input shaft (103) by closing and opening the clutch (110) respectively, thereby locking and unlocking the planetary system. A one way clutch (301) connects the crank shaft (101) and a stationary housing (300). The one way clutch (301) can also be a friction clutch or dog clutch or a simple lock. When it is needed to launch and drive the vehicle purely by the motor (111) & also using the planetary gears for motor torque multiplication or speed reduction, while the engine (100) is stationary, this one way clutch or friction clutch (301) at the engine crank shaft (101) prevents the crank shaft (101) from rotating anticlockwise direction so as to aid the motor (111) to launch and drive the vehicle for zero emission operation.

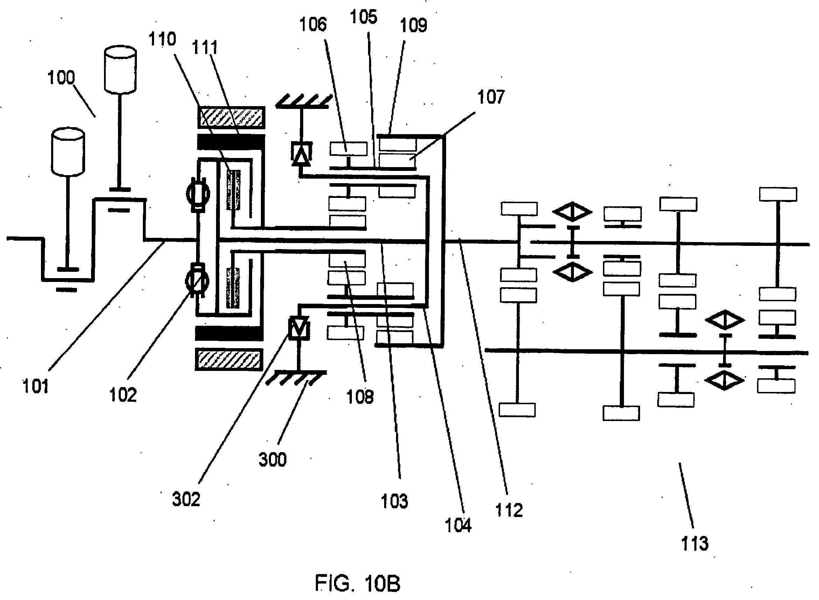

Referring to FIG. 10B, the prime mover engine (100) drives the crank shaft or flywheel (101). The crank shaft or flywheel (101) is connected to torsional damper system (102), which drives the input shaft (103). The input shaft (103) is connected to the planet carrier (104). The planet carrier (104) has at least one staged planet gear set (105). The staged planet gear set (105) is having planet primary gear (106) & planet secondary gear (107) which is integral with each other. The planet secondary gear (107) is smaller in diameter and has lesser number of teeth as compared to the planet primary gear (106). The planet primary gear (106) meshes with the sun gear (108), while the planet secondary gear (107) meshes with the internal gear (109). The sun gear (108) is connected to the motor-generator (111). The internal gear (109) is connected to the transmission input shaft (112) of the transmission (113). The clutch (110) can couple and decouple the sun gear (108) with the input shaft (103) by closing and opening the clutch (110) respectively, thereby locking and unlocking the planetary system. A one way clutch (302) connects the carrier (104) and a stationary housing (300). The one way clutch (302) can also be a friction clutch or dog clutch or a simple lock. When it is needed to launch and drive the vehicle purely by the motor (111) & also using the planetary gears for motor torque multiplication or speed reduction, while the engine (100) is stationary, this one way clutch or friction clutch (302) at the carrier (104) prevents the carrier (104) from rotating anticlockwise direction so as to aid the motor (111) to launch and drive the vehicle for zero emission operation. Where there is requirement that the engine (100) needs to be put on, or when a petrol engine is used, then an engine decouple clutch like mentioned in schemes of FIG. 9A or 9B is also necessary.

The foregoing description is a specific embodiment of the present invention. It should be appreciated that this embodiment is described for purpose of illustration only, and that numerous alterations and modifications may be practiced by those skilled in the art insofar as they come within the scope of the invention as claimed.

## Claims

1. A drive system for a vehicle comprising:
the planetary gear system includes an integrated primary (41) and secondary planetary gear set (42) and supported on plurality of planet bearings placed on a planet carrier outside of the planet gears;
said primary planet gear set (41,106) in a meshing relationship with a sun gear (11,108) and said secondary planetary gear set (42,107) in a meshing relationship with an internal gear (45, 109)
said secondary planetary gear set (42,107) has a smaller diameter and lesser number of teeth compared to the primary planetary gear set (41,106) to form a compact planetary gear system;
the input shaft to the planetary systen is supported by the planet carrier,
**characterized in that**
a plurality of covers (46,47) mounted on the planetary system forms an envelope around the planetary gear system to hold the lubricating oil for the planetary gear system.

2. The drive system as claimed in claim 1, wherein the sun gear (108) is connected to a motor-generator (111), the internal gear (45, 109) is connected to a transmission input shaft (64, 112) and the planet carrier is connected to an engine of the drive system.

3. The drive system as claimed in any one of the preceding claims 1- 2, wherein a first cover (46), and a second cover (47) and the internal gear (45) are held together by a fastening member (49).

4. The drive system as claimed in claim 1, wherein the sun gear (108) is connected to a motor-generator (111), the internal gear (45, 109) is connected to a engine and the planet carrier is connected to transmission. input shaft of the drive system.

5. The drive system as claimed in any one of the preceding claim 1 and 4, wherein a first cover (46), and a second cover (47) and the carrier are held together by a fastening member (49).

6. The drive system as claimed in any one of the preceding claims, wherein the fastening hole for the fastening member is used for filling and draining oil out of the planetary gear system.

7. The drive system as claimed in any one of the preceding claims, wherein oil quantity reduction guides (54) are placed between the primary planetary gear set (41) and the secondary planetary gear set (42).

8. The drive system as claimed in any one of the preceding claims, wherein oil blocking washer (53) is provided on the face of the sun gear proximal to an oil seal (52) for preventing excessive oil impinging on the oil seal (52).

9. The drive system as claimed in claim any one of the preceding claims, wherein the oil seal (52) and the spline (37) are located below the secondary planet gear set (42).

10. The drive system as claimed in any one of the preceding claims, wherein the input shaft (9, 103) has an axially extended air passage (55).

11. The drive system as claimed in any one of the preceding claims, wherein an oil gallery (62) is formed at the end of the input shaft such that one end of the axial air passage (55) communicates with the oil gallery and the other end communicates to outside atmosphere through plurality of radial passages (56).

12. The drive system as claimed in any one of the preceding claims, wherein the oil gallery (62) has at least two radial air passages (61), one end of said radial air passage (61) opens into the oil gallery and the other end is exposed to the lubricating oil of the planetary gear system.

13. The drive system as claimed in any one of the preceding claims , wherein the oil gallery (62) enables linking of the radial air passages (61) with the axial air passage (55).

14. The drive system as claimed in any one of the preceding claims, wherein an oil deflector (59) is obliquely shaped to cover the radial air passages (61) provided proximal to the oil gallery (62).

15. The drive system as claimed in any one of the preceding claims wherein the second cover (47) is adapted to drive a transmission input shaft (64).

## Patentansprüche

1. Antriebssystem für ein Fahrzeug, umfassend:
das Planetengetriebesystem weist einen integrierten Primärplanetengetriebesatz (41) und einen Sekundärplanetengetriebesatz (42) auf und ist auf mehreren Planetenlagern gelagert, die auf einem Planetenträger außerhalb des Planetengetriebes angeordnet sind;
wobei der Primärplanetengetriebesatz (41,106) sich in Eingriffbeziehung mit einem Sonnenrad (11,108) und der Sekundärplanetengetriebesatz (42,107) sich in Eingriffbeziehung mit einem Innenzahnrad (45, 109) befindet;
wobei der Sekundärplanetengetriebesatz (42,107) einen kleineren Durchmesser und eine geringere Anzahl von Zähnen als der Primärplanetengetriebesatz (41, 106) aufweist, um ein kompaktes Planetengetriebesystem zu bilden;
die Eingangswelle des Planetensystems ist von dem Planetenträger getragen,
**dadurch gekennzeichnet, dass** mehrere, auf dem Planetensystem befestigte Deckel (46,47) ein Gehäuse rund um das Planetengetriebesystem bilden, um das Schmieröl für das Planetengetriebesystem aufzunehmen.

2. Antriebssystem nach Anspruch 1, wobei das Sonnenrad (108) mit einem Motorgenerator (111) verbunden ist, das Innenzahnrad (45, 109) mit einer Getriebeeingangswelle (64, 112) verbunden ist und der Planetenträger mit einem Motor des Antriebssystems verbunden ist.

3. Antriebssystem nach einem der vorstehenden Ansprüche 1 bis 2, wobei ein erster Deckel (46) und ein zweiter Deckel (47) und das Innenzahnrad (45) durch ein Befestigungselement (49) zusammengehalten werden.

4. Antriebssystem nach Anspruch 1, wobei das Sonnenrad (108) mit einem Motorgenerator (111) verbunden ist, das Innenzahnrad (45, 109) mit einem Motor verbunden ist und der Planetenträger mit der Getriebeeingangswelle des Antriebssystems verbunden ist.

5. Antriebssystem nach einem der vorstehenden Ansprüche 1 und 4, wobei ein erster Deckel (46) und ein zweiter Deckel (47) und der Träger durch ein Befestigungselement (49) zusammengehalten werden.

6. Antriebssystem nach einem der vorstehenden Ansprüche, wobei das Befestigungsloch für das Befestigungselement zum Einfüllen und Ablassen des Öls aus dem Planetengetriebesystem verwendet wird.

7. Antriebssystem nach einem der vorstehenden Ansprüche, wobei Führungen (54) zur Verminderung der Ölmenge zwischen dem Primärplanetengetriebesatz (41) und dem Sekundärplanetengetriebesatz (42) angeordnet sind.

8. Antriebssystem nach einem der vorstehenden Ansprüche, wobei Ölblockierungsscheibe (53) auf der Fläche des Sonnenrads, nahe einer Öldichtung (52) vorgesehen ist, um einem zu starken Auftreffen des Öls auf der Öldichtung (52) entgegenzuwirken.

9. Antriebssystem nach einem der vorstehenden Ansprüche, wobei die Öldichtung (52) und die Keilwelle (37) unterhalb des Sekundärplanetengetriebesatzes (42) angeordnet sind.

10. Antriebssystem nach einem der vorstehenden Ansprüche, wobei die Eingangswelle (9, 103) einen sich axial erstreckenden Luftkanal (55) aufweist.

11. Antriebssystem nach einem der vorstehenden Ansprüche, wobei eine Ölleitung (62) am Ende der Eingangswelle so ausgebildet ist, dass ein Ende des axialen Luftkanals (55) mit der Ölleitung und das andere Ende durch mehrere radiale Kanäle (56) mit der Außenatmosphäre in Verbindung steht.

12. Antriebssystem nach einem der vorstehenden Ansprüche, wobei die Ölleitung (62) mindestens zwei radiale Luftkanäle (61) aufweist, wobei ein Ende des radialen Luftkanals (61) in die Ölleitung mündet und das andere Ende dem Schmieröl des Planetengetriebesystems ausgesetzt ist.

13. Antriebssystem nach einem der vorstehenden Ansprüche, wobei die Ölleitung (62) die Verbindung der radialen Luftkanäle (61) mit dem axialen Luftkanal (55) ermöglicht.

14. Antriebssystem nach einem der vorstehenden Ansprüche, wobei ein Ölablenker (59) abgeschrägt ausgebildet ist, um die radialen Luftkanäle (61), die nahe der Ölleitung (62) vorgesehen sind, zu bedecken.

15. Antriebssystem nach einem der vorstehenden Ansprüche, wobei der zweite Deckel (47) dazu geeignet ist, eine Getriebeeingangswelle (64) anzutreiben.

## Revendications

1. Système de transmission pour un véhicule, comprenant :
le système d'engrenages planétaires comprend un engrenage planétaire primaire (41) et secondaire (42) intégré and supporté sur une pluralité de paliers planétaires placés sur un support planétaire à l'extérieur des pignons planétaires ;
ledit engrenage planétaire primaire (41, 106) dans une relation d'engrènement avec un pignon solaire (11, 108) et ledit engrenage planétaire secondaire (42, 107) dans une relation d'engrènement avec un pignon interne (45, 109);
ledit engrenage planétaire secondaire (42,107) a un diamètre plus petit et un nombre de dents inférieur par rapport à l'engrenage planétaire primaire (41,106) pour former un système d'engrenages planétaires compact;
l'arbre d'entrée pour le système planétaire est supporté par le support planétaire,
**caractérisé en ce que**
une pluralité de couvercles (46, 47) montés sur le système planétaire forme une enveloppe autour du système d'engrenages planétaires pour maintenir l'huile lubrifiante pour le système d'engrenages planétaires.

2. Système de transmission selon la revendication 1, dans lequel le pignon solaire (108) est connecté à un moteur-générateur (111), le pignon interne (45, 109) est connecté à un arbre d'entrée de transmission (64, 112) et le support planétaire est connecté à un moteur du système de transmission.

3. Système de transmission selon l'une quelconque des revendications précédentes 1- 2, dans lequel un premier couvercle (46), et un deuxième couvercle (47) et le pignon interne (45) sont maintenus ensemble par un élément de fixation (49).

4. Système de transmission selon la revendication 1, dans lequel le pignon solaire (108) est connecté à un moteur-générateur (111), le pignon interne (45, 109) est connecté à un moteur et le support planétaire est connecté à un arbre d'entrée de transmission du système de transmission.

5. Système de transmission selon l'une quelconque des revendications précédentes 1 et 4, dans lequel un premier couvercle (46), et un deuxième couvercle (47) et le support sont maintenus ensemble par un élément de fixation (49).

6. Système de transmission selon l'une quelconque des revendications précédentes, dans lequel le trou de fixation pour l'élément de fixation est utilisé pour remplir et évacuer l'huile hors du système d'engrenages planétaires.

7. Système de transmission selon l'une quelconque des revendications précédentes, dans lequel des guides de réduction de quantité d'huile (54) sont placés entre l'engrenage planétaire primaire (41) et l'engrenage planétaire secondaire (42).

8. Système de transmission selon l'une quelconque des revendications précédentes, dans lequel une rondelle de blocage d'huile (53) est disposée sur la face du pignon solaire à proximité d'un joint d'étanchéité d'huile (52) pour éviter une incidence excessive de l'huile sur le joint d'étanchéité d'huile (52).

9. Système de transmission selon l'une quelconque des revendications précédentes, dans lequel le joint d'étanchéité d'huile (52) et la cannelure (37) sont situés au-dessous de l'engrenage planétaire secondaire (42).

10. Système de transmission selon l'une quelconque des revendications précédentes, dans lequel l'arbre d'entrée (9, 103) comporte un passage d'air s'étendant axialement (55).

11. Système de transmission selon l'une quelconque des revendications précédentes, dans lequel une rampe à huile (62) est formée à l'extrémité de l'arbre d'entrée de manière qu'une extrémité du passage d'air axial (55) communique avec la rampe à huile et l'autre extrémité communique avec l'atmosphère extérieure à travers une pluralité de passages radiaux (56).

12. Système de transmission selon l'une quelconque des revendications précédentes, dans lequel la rampe à huile (62) comporte au moins deux passages d'air radiaux (61), une extrémité dudit passage d'air radial (61) débouche dans la rampe à huile et l'autre extrémité est exposée à l'huile lubrifiante du système d'engrenages planétaires.

13. Système de transmission selon l'une quelconque des revendications précédentes, dans lequel la rampe à huile (62) permet la liaison des passages d'air radiaux (61) avec le passage d'air axial (55).

14. Système de transmission selon l'une quelconque des revendications précédentes, dans lequel un déflecteur d'huile (59) est profilé obliquement pour couvrir les passages d'air radiaux (61) disposés à proximité de la rampe à huile (62).

15. Système de transmission selon l'une quelconque des revendications précédentes, dans lequel le deuxième couvercle (47) est adapté pour entraîner un arbre d'entrée de transmission (64).
